# EUROPEAN PATENT SPECIFICATION

(11) **EP 3 159 776 B1**
(45) Date of publication and mention of the grant of the patent: **20.11.2019**
(21) Application number: 15306665.9
(22) Date of filing: 19.10.2015
(51) Int. Cl.: G06F 3/039, G06F 3/0354, G06F 3/03, G06F 3/041

(54) **ARRANGEMENT TO MEASURE AND USE LATENCY BETWEEN AN INPUT INTERFACE AND AN OUTPUT INTERFACE OF A PROCESSING DEVICE**
ANORDNUNG ZUR MESSUNG UND VERWENDUNG DER LATENZ ZWISCHEN EINER EINGABESCHNITTSTELLE UND EINER AUSGANGSSCHNITTSTELLE EINER VERARBEITUNGSVORRICHTUNG
DISPOSITIF POUR MESURER ET UTILISER UNE DURÉE D'ATTENTE ENTRE UNE INTERFACE D'ENTRÉE ET UNE INTERFACE DE SORTIE D'UN DISPOSITIF DE TRAITEMENT

(43) Date of publication of application: 26.04.2017
(73) Proprietor: Ecole Nationale de l'Aviation Civile, 31400 Toulouse Cedex (FR)
(72) Inventor: CONVERSY, Mr. Stéphane, 31400 TOULOUSE (FR)
(74) Representative: Bell, Mark

(56) References cited:
- EP-A1- 0 594 460
- WO-A1-2015/054301
- US-A1- 2012 092 470
- US-A1- 2014 025 309

## Description

### FIELD OF THE INVENTION

The present invention applies to the field of Human-Computer Interaction (HCl). More specifically the focus of the invention is on measurement and calibration of end-to-end latency of a Man Machine Interface (MMI).

### BACKGROUND

A MMI comprises one or more of an input interface and an output interface connected to a processing device. Input interfaces have evolved from a simple keyboard to a plurality of modalities including, by way of example, a 2D or a 3D mouse or pointer, a joystick, a touch pad or a touch screen, a microphone or a camera. Output interfaces comprise, among others, displays, video projectors, loudspeakers or headphones, signaling devices, etc. The processing devices with which a human may interact have also diversified: they now include, in addition to traditional desktop, laptop, server computers or TVs, game consoles, tablets, smart phones, but also robots, for example humanoid robots, and also aircrafts, cars or home appliances. An interaction may be local or at a distance, over a network, through a plurality of machines. An interaction may involve a single human or a plurality of humans or living beings.

The experience of a user when dealing with an application running on a processing device will depend to a high degree on the quality of the MMI. Quality depends not only on the ease of use but also on how reactive is the output interface to entries in the input interface. This parameter of quality is significantly affected by the time it takes for an input to be converted into an output by the processing chain. This time is called end-to-end latency. In local systems with one human only in a simple loop of a mouse command to a display of a cursor movement, latency may be as low as a few ms or as high a number of tens of ms. A latency of 50 ms is known to degrade the user experience. Also, variance of the latency (i.e. jitter) will be badly perceived.

This is particularly annoying for professional applications like air traffic control or aircraft piloting, but also for interaction intensive consumer applications like video games. Application developers have therefore tried to find ways to compensate latency and/or jitter. To do this it is necessary to measure these factors. This has been classically done for a mouse to display loop by using an external acquisition device such as a camera to detect the movement of a cursor on a screen, said movement being controlled by a mouse. The process requires a synchronization of the processing device and of the camera, which is not easy to achieve with sufficient precision.

The invention solves this problem of the prior art by providing an arrangement wherein the measurement of latency uses a single clock, shared by the processing device and the acquisition device. US 2014/025309 A1 discloses an arrangement for simulating the response time of the reaction of a human subject to a visual response on a display for measuring system latency.

### SUMMARY OF THE INVENTION

The invention is defined as in the appended claims.

Advantageously, the two-dimensional periodic image comprises elementary patterns, each elementary pattern comprising at least a number N of pixels of two different colors, at least n pixels in each elementary pattern being of a first color of a bright shade with a contrast to the other pixels of a second color equal to or higher than a preset threshold.

Advantageously, the number N of pixels is determined by taking into account a number of pixels of the optical sensor, a size of an image of the pixels of the optical sensor and a resolution of the screen.

Advantageously, n is higher than or equal to a minimum number of pixels of the first color which are needed by a tracking algorithm of the sensor and lower than or equal to a maximum number of pixels of the first color which define characteristic points at their boundary which remain invariant by a translation of one pixel of the elementary pattern in a direction of motion of the calibrated output.

Advantageously, N equals 9 and n equals 2.

Advantageously, at least two pixels in the n pixels of the first color are diagonally contiguous.

The invention also discloses the two-dimensional periodic image used in the arrangement of the invention or stored on a computer media.

The application also discloses a processing device comprising an input interface and an output interface, said processing device being configured to operate a routine of compensation of a latency between an input command input at the input interface and an output output at the output interface based on execution of the input command by the processing device, said routine of compensation of a latency being configured to receive a set of parameters produced by a calibration routine, said calibration routine using results of an interaction between a sensor and a generator of a calibrated output at the output interface.

Advantageously, the calibration routine is first performed to produce a table of parameters and the routine of compensation is further configured to receive the set of parameters from a calculation based on the table of parameters.

Advantageously, the calculation based on a table of parameters uses settings of one or more of hardware and software settings of the processing device and the calibration routine and the routine of compensation are chained, so that compensation of latency is performed in real-time.

The application also discloses a software development toolkit configured to develop interactive applications, comprising a modeler of a latency between input commands input at an input interface of a processing device and an output interface of the processing device, wherein said modeler of a latency is configured to perform one or more of measuring and compensating latency, measuring latency being based on said input interface being configured to receive an input generated by an interaction of a sensor with a generator of a calibrated output.

Advantageously, the software development toolkit of the software development toolkit of the invention is further configured to perform one or more of measuring and compensating latency based on a segmentation of said latency between one or more hardware and software segments of an environment of the processing device.

Thanks to the invention, a simple way is provided to measure, calibrate and compensate latency and jitter. The arrangement of the invention is one using an optical sensor. A comparable arrangement that is not in correspondence with the invention as claimed, but is useful for understanding the invention can work for a number of other input interfaces and output interfaces, like audio interfaces. In some embodiments, the calibration allows real time compensation of latency and jitter.

### BRIEF DESCRIPTION OF THE DRAWINGS

The invention will be better understood and its various features and advantages will become apparent from the description of various embodiments and of the following appended figures :
- Figure 1 represents an arrangement of the prior art to measure latency;
- Figure 2 represents a diagram of a pipeline of events in an interaction loop to illustrate the concept of the invention
- Figures 3a and 3b represent two arrangements to measure latency according to the invention;
- Figures 4a, 4b and 4c represent different views of a two-dimensional periodic image in an arrangement to measure latency in a number of embodiments of the invention;
- Figures 5a, 5b, 5c, 5d and 5e illustrate some aspects of the so-called "screen door effect";
- Figures 6a, 6b, 6c and 6d represent elementary patterns which have some disadvantages;
- Figures 7a and 7b represent an elementary pattern which has some advantages to generate a calibrated output according to the invention;
- Figure 8 represents distributions of latency as measured in a number of embodiments of the invention;
- Figure 9 represents a flowchart of a process to compensate latency in real-time according to certain aspects of the invention.

### DETAILED DESCRIPTION

The end-to-end latency (or lag) of a graphical user interface is commonly defined as the duration between a user action (e.g. movement of an input device or human limb) and the corresponding on-screen visual feedback (e.g. cursor movement, object displacement). All interactive systems have some latency introduced by input and output devices, network, events handling and processing. Latency is difficult to measure and is only occasionally reported on input or output devices datasheets, interactive systems specifications or MMI experiments reports. Latency and its variation over time, called latency jitter, have been known for a long time to affect human performance and qualitative perception. A latency of around 50 ms is known to affect performance in mouse-based pointing tasks and latency jitter above 20-40 ms is likely to be noticed. The effect is even more pronounced in direct touch interaction, where it has been shown that latency as low as 2 ms can be perceived and that performance is affected from 20 ms.

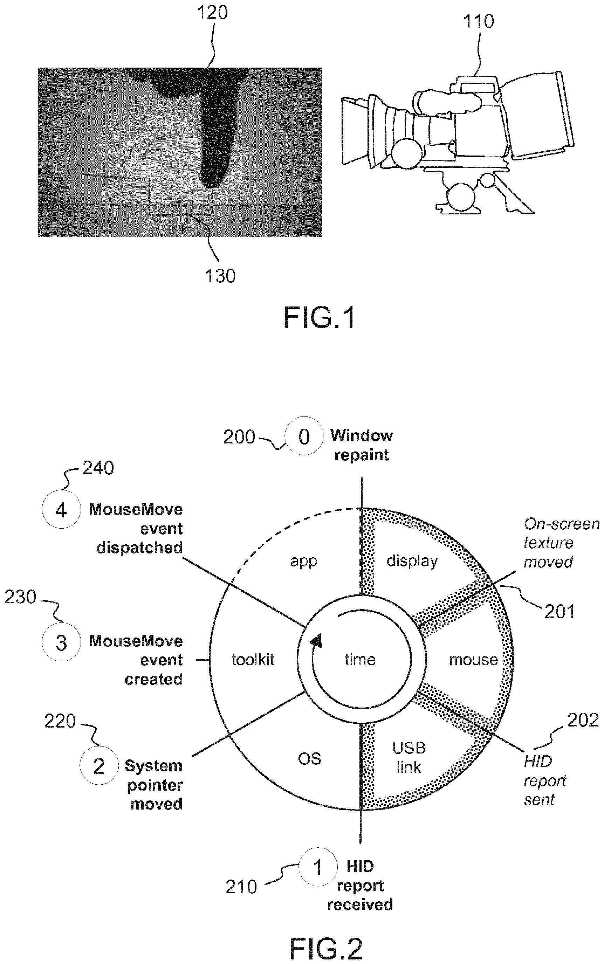

Figure 1 represents an arrangement of the prior art to measure latency.

Credit for the photo on the left hand part of the figure is given to the publication from which it is extracted ("Designing for Low-Latency Direct-Touch Input", Albert Ng et alii, UIST'12)
It is the most common procedure to measure end-to-end latency. An external camera 110 is used to record both the input device 120 (or finger) and the associated response on screen. An analysis of the video is then performed to match the two related events in order to count the number of elapsed frames 130 between them.

Different variants of equipments may be used to measure latency, for instance the ones disclosed by Teather, Pavlovych, Stuerzlinger and MacKenzie in "Effects of tracking technology, latency and spatial jitter on object movement", Proceedings of 3DUI '09, IEEE (2009), 43-50.

Other settings are possible, but the different settings of the prior art share common features and limitations.

Regarding the common features, the methods of the prior art use mechanical systems to generate calibrated periodic input to a computer, measure the period of these input and measure the times of output of the periodic input on a display of computer.

Regarding the common limitations:
- they are cumbersome to install and operate, which makes it difficult to envisage measurement beyond laboratories experiments, for instance in order to calibrate an actual system in its operating conditions;
- also, since the generic method relies on a comparison of the output of two hardware equipments (the screen of a computer and a camera), the precision of the comparison is heavily dependent on the synchronization of the clocks of the two equipments, which is not easy to achieve with sufficient precision.

The invention allows overcoming both drawbacks.

Figure 2 represents a diagram of a pipeline of events in an interaction loop to illustrate the concept of the invention.

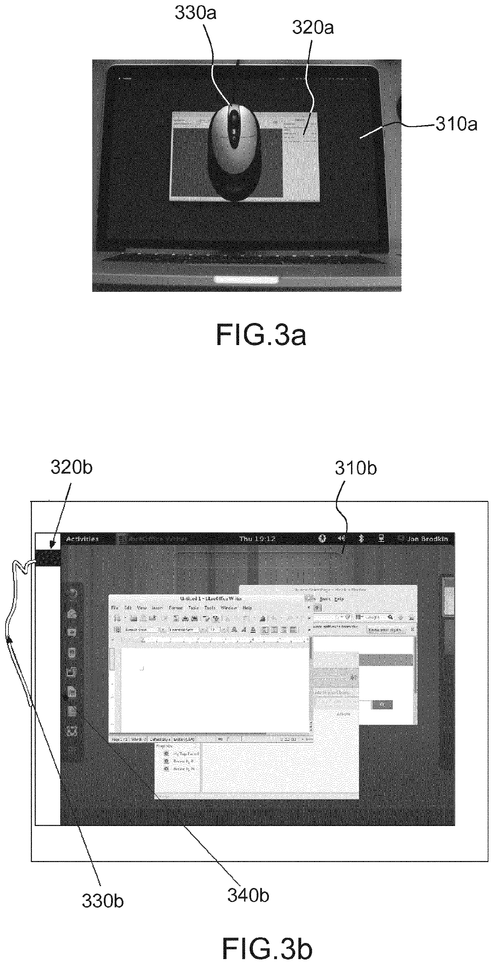

The concept of the invention is to use an interaction loop which is inverted compared to the interaction loop of the methods and systems of the prior art: instead of generating a calibrated input and capturing the corresponding output, according to the invention a calibrated output is generated by a processing device through the output interface, for instance a display; a sensor captures the output at the display and feeds it back to the processing device, thus closing the interaction loop. In the arrangements of the invention, the clock of the processing device synchronizes the interaction loop. A number of arrangements can be used to embody such systems, notably those commented upon further below in the description in relation to figures 3a and 3b.

Figure 2 illustrates the concept of the invention when the calibrated output is a repaint of a window on the screen of a computer, using a calibrated texture displayed on the screen and the sensor is a mouse affixed vis-à-vis the calibrated texture. This is a conceptual pipeline between a (simulated) physical movement of the mouse and the notification of this movement to the appropriate on-screen widget. Such a system according to the invention is able to measure point-to-point latency by inserting probes at different software locations illustrated on the figure by the time of the clock, from 200, when a window repaint order is generated, to 240, when a MouseMouse event is dispatched.

At time 200 an instruction is sent to the processor to move the texture to start a window repaint. At time 201 (not measured in the example of the figure), the texture actually starts moving on-screen. The lag between 200 and 201 is the display lag (drivers and pixels). The change in pixels on-screen is captured by the mouse and an HID report is sent at time 202 (not measured in the example of the figure). An HID report is a message sent from the mouse driver to the processing device which carries the information received by the mouse sensor (for instance, X, Y coordinates of the center of the mouse). The lag between 201 and 202 is the mouse lag (combination of sensor and MCU lag). At time 210, the HID report is received at the processing device. The lag between 202 and 210 is the USB link lag (in case the mouse is connected to a USB port; but of course, it can be connected to other types of ports, for instance a PS2 port). At time 220, the system pointer is moved. The lag between 210 and 220 is the OS lag. At time 230, a MouseMove event is created. At time 240, a MouseMouse event is dispatched. The lag between 220 and 230 and between 230 and 240 is the toolkit lag.

Therefore the end-to-end latency between 200 and 240 can be measured, as well as the latencies of the main components in the interaction loop.

Figures 3a and 3b represent two arrangements to measure latency according to the invention.

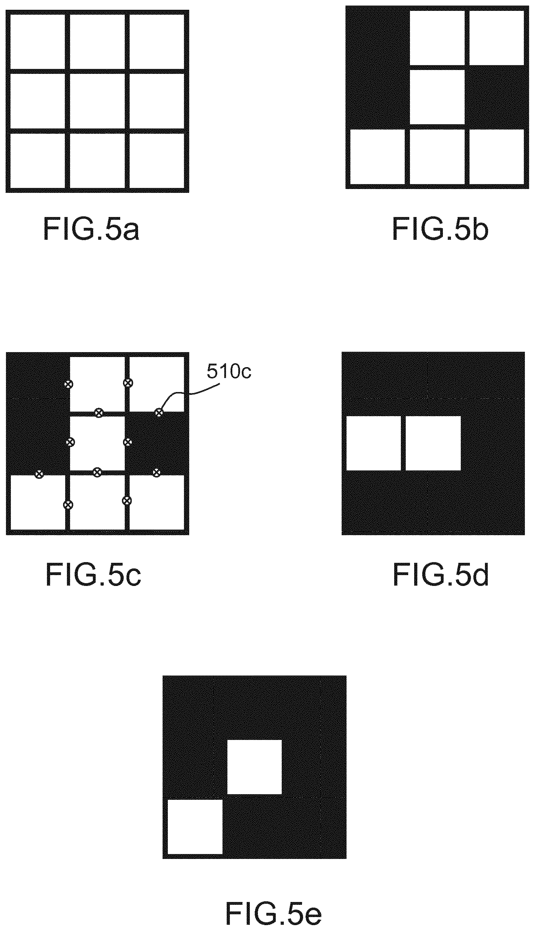

In a first embodiment depicted on figure 3a, a screen 310a of a computer has a specific texture 320a which will be described further down in the description. The texture moves on the screen in front of the mouse 330a which remains at a fixed position on the screen. Latency of the hardware and software elements in the interaction loop is measured by the cycle of capturing by the optical sensor of the mouse 330a the movements of the texture 320a on the screen. The mouse 330a can for instance be of the MX310 Logitech™ type. But any other type of mouse can be used. Some other types of mouse are listed further down in the description in relation to Figure 5.

A modern computer mouse consists of a small camera comprising a pixel array comprising typically between 18x18 and 30x30 pixels, a lens and a LED or laser to illuminate the surface. The mouse microcontroller processes the images at a high frame rate, typically between 1500 Hz and 12000 Hz, to detect visible features in the image and measure their translation between consecutive images. The measured displacements are reported to the computer as counts. The sensor has a relative responsiveness above 80% typically for wavelengths between 500 nm (green) and 950 nm (infrared). The camera adjusts its shutter to keep the brightest pixel at a given value. The lens determines the dimensions of the area under the mouse recorded by the camera. Laser mice typically record a smaller area to see finer details.

One of the methods of the invention for measuring end-to-end latency consists in positioning a standard computer mouse at a fixed location on an horizontally oriented monitor. Alternatively, one can use adhesive (e.g. Blu-Tack) to stick the mouse on a vertical monitor but should take care not to increase the distance between the sensor and the screen too much in order to avoid blurring the captured image. Depending on the shininess of the screen surface, the LED of the mouse has to be obscured with e.g. black tape, if the mouse cursor hardly moves or does not move when moving the mouse on the monitor displaying a white background.

Once the mouse is correctly set up on the display, a given texture is displayed on the screen and moved of a controlled distance (e.g. 1px), while a timestamp is recorded. The texture displacement is intended to create a well-controlled closed loop by producing a fake mouse displacement at a given and measurable time, which will thus be detected and reported by the mouse sensor to the system as a normal event. Upon reception of this event and subsequent ones (drivers, system pointer, toolkit, etc.), successive timestamps are recorded and latency can be measured at several characteristic instants as discussed in relation to figure 2.

The texture 320a must be selected adequately, so that, when displayed, its translation will produce a displacement that (i) can be detected by the mouse sensor; and (ii) can subsequently produce a system cursor displacement.

Mice resolution is reported in CPI (counts per inch) which corresponds to the smallest displacement they can report. It starts at 400 CPI and can go up to 12,000 CPI. Screens resolution, in PPI (pixels per inch), is far lower, around 100 PPI for current average-end LCD monitors, while high-resolution monitors can go up to 300-400 PPI. This means that a translation of a single pixel on the highest-end monitor is larger than what can measure the lowest-end mouse. As a result, moving a texture of one pixel ensures the displacement can be detected by the mouse. It is also useful to configure the arrangement so that a part of the texture remains visible by the mouse sensor after it is translated: thus the mouse will see common features between two images to compute a displacement.

Accordingly, the displacements of the mouse have to be converted in movements of the texture on the screen using a transfer function which is specific to the OS of the computer. Moving the texture of one pixel is likely to produce mouse reports as low as 1 count. Thus, it is generally useful to configure the arrangement so that 1 count produces a displacement of the system pointer of at least 1 pixel after the operating system transfer function is applied.

In an alternative embodiment depicted on figure 3b, under a hidden part 340b of a screen 310b, a mouse sensor 330b, comprising the light source (LED or laser) and the sensor array, is placed to sense movements of a texture 320b in the hidden part of the screen. Of course, the mouse sensor has to be connected to the adequate port of the computer to transmit its HID messages. In such an arrangement, 95% of the screen may be used and the measurement of latency can be permanently performed without affecting the operational use of the computer screen.

The impact on latency of the position of the sensor/image arrangement on the screen is a known fixed parameter. In most configurations, the zero position is the upper left corner of the screen.

Sensors of other types can be selected and implemented. For example, in the audio domain, one could design a specific 'audio' texture/signature, that once played by the processing device through sound monitors could be captured by a microphone connected to the processing device and recognized by said processing device thanks to recognition algorithms. The processing device would then subtract the time of emission of the audio texture from the time of reception of the audio texture to find the latency.

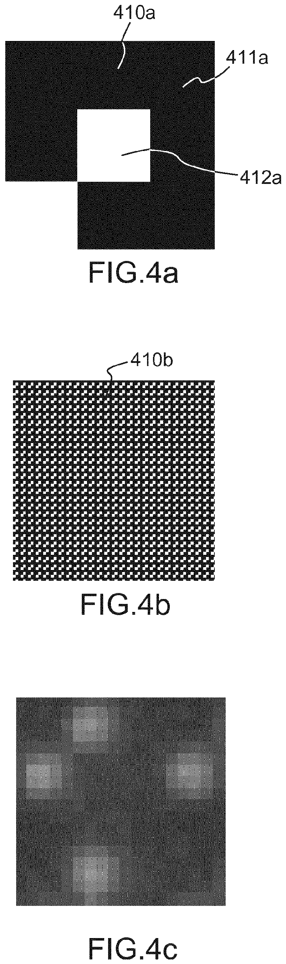

Figures 4a, 4b and 4c represent different views of a two-dimensional periodic image in an arrangement to measure latency in a number of embodiments of the invention.

Figure 4b represents an example of texture 410b which can be used as the calibrated output to be sensed by the sensor of figures 3a and 3b.

To determine the elementary pattern 410a of the texture, it is first useful to determine the number of pixels corresponding to an image of the sensor. For example, for an array of 18x18 pixels, the area is about 1 mm². In a 100 PPI screen, this corresponds to about 3x3 visible pixels. A periodic pattern of this type can therefore advantageously be selected for the texture to be used. On a 300 PPI screen this area corresponds to 9x9 visible pixels. The number N of pixels in an elementary pattern may therefore be 9 or 81 in these examples.

Another element to be taken into effect to select an appropriate texture is the so-called "screen door effect". To avoid the grid which results from this effect and which can make all measurements impossible, a number of rules have to be applied, which will be discussed further down in the description.

Another element to be taken into account is that it is advantageous to use two types of pixels, 411a and 411b, which have shades with sufficient contrast. For instance, it may be advantageous to set a threshold of contrast above which the differences in shades should be selected. In one embodiment of the invention, it may be advantageous to select pixels 411a of a black shade and pixels 411b of a white shade. In most embodiments, the ratio of contrast between the brighter shade pixels and the darker shade pixels will be higher than 90%, or even 95%.

A combination of these considerations leads to the selection of an advantageous elementary pattern 410a for the texture of the invention, which is displayed on figure 4a. According to an embodiment, this elementary pattern has 9 pixels, including 7 pixels 411a of a dark shade and 2 pixels 412a of a light shade, these two pixels of a light shade being laid out contiguously on a diagonal of the square elementary pattern. When the elementary pattern includes more than 9 pixels, the number of light shade will be increased.

It can be seen of figure 4c that the screen door effect is cancelled.

Figures 5a, 5b, 5c, 5d and 5e illustrate some aspects of the so-called "screen door effect".

The screen door effect results from the fact that the pixels of the display are not exactly contiguous. There is therefore a grid of dark lines which delineates the pixels. Depending on the resolution of the sensor and the distance from the surface of the display, the grid is visible or not. When the sensor is close to the display it is generally visible, like on figure 5a.

The algorithms used to process the signals captured by the sensors of a mouse are not entirely known. It is nevertheless very likely that some characteristic points of high contrast are selected and tracked when the mouse moves (or in our case when the texture moves). The dark lines resulting from the screen door effect will therefore generate characteristic points. Since it is advantageous to have a majority of the characteristic points which are not invariant by a translation of one pixel in the direction of motion, it is necessary to make sure that the characteristic points generated by the screen door effect and are invariant, are as few as possible .

In the measurement arrangement of the invention, a texture of the kind of figure 5a would not be able to detect a move of one pixel since it is likely that a point on each line of the grid will be selected as a characteristic point, whereas all of them are invariant by a one pixel translation.

By way of example, figure 5b displays an elementary pattern which has fewer bright pixels than the pattern of figure 5a, and which has less invariant characteristic points. An elementary picture of this kind will be more adequate than the one of figure 5a. It is therefore advantageous to reduce the number of bright pixels in an elementary pattern according to the invention. But the pattern must have a minimum number of bright pixels, because it is likely that a minimum number of characteristic points should be available to be tracked by the sensor to measure the movement of the pattern. Therefore, the number n of bright pixels must be higher than a minimum, which equals a minimum number of characteristic points for the sensor tracking algorithm to work, and lower than a maximum, which is determined by the need to limit the number of contiguous bright pixels which create characteristic points which will be invariant by translation. There is thus an optimum number n of bright pixels. For instance, for a number N equal to 9, a number n equal to 2 is advantageous.

Figure 5c represents the elementary pattern of figure 5b with some characteristic points 510c to be tracked by the sensor displayed. This is by way of example only since, many types of different detection and tracking algorithms may be used by the mice drivers. There, the assumption has been made that the midpoints of the edges of the bright pixels would be the characteristic points detected by the sensors which will have to be tracked by the sensors and detected as moving. Other points may be selected, for instance the corners instead of the edges. A same type of reasoning would nevertheless apply.

Also a comparison of figures 5d and 5e shows that bright pixels which are aligned in the direction of motion are less advantageous than a configuration wherein the bright pixels are aligned at an angle of 45° relative to the direction of motion. This is because there is no contiguous area of contact between bright pixels which would create characteristic points of a high contrast which will be invariant by a one pixel translation.

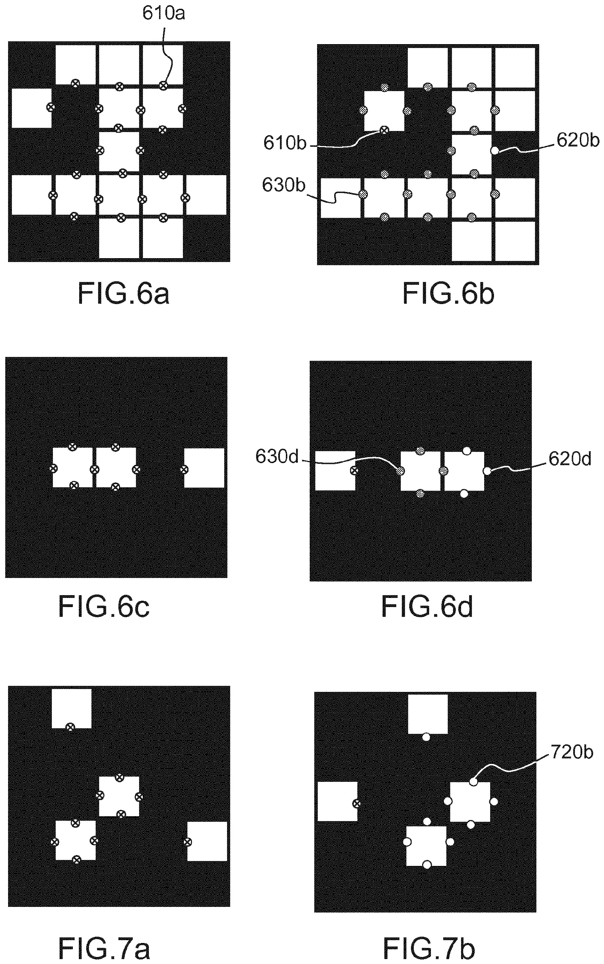

Figures 6a, 6b, 6c and 6d represent elementary patterns which have some disadvantages.

Figure 6a represents the elementary pattern of figures 5b and 5c with two rows and two colums of neighboring pixels on top, below, left and right. The light shaded points 610a represent the characteristic

Figure 6b represents the grid of figure 6a moved to the right of one pixel. We can see three types of characteristic points:
- Point 610b is a characteristic point which was not present in figure 6a;
- Point 620b is a characteristic point which was present in figure 6a and was correctly tracked to its position on figure 6b; it is assumed that proper motion detection and tracking supposes that the characteristic point is located after motion at the same location as another characteristic point before motion;
- Point 630b is a characteristic point which was present in figure 6a and was not correctly tracked to its position of figure 6b, because the characteristic point is located after motion at the same location as another characteristic point before motion; likewise for points of the same shade in the figure.

It can be seen that the number of characteristic points of the third type outweighs by far the number of points of the two other types, which means that this elementary pattern is not fit for the invention.

Figure 6c represents a view of the elementary pattern of figure 5d, with its neighboring pixels.

Figure 6d represents the grid of figure 6c moved to the right of one pixel. There the number of characteristic points tracked correctly, 620d, is much higher than in the previous case. But the number of characteristic points not correctly tracked, 630d, is still high.

Figures 7a and 7b represent an elementary pattern which has some advantages to generate a calibrated output according to the invention.

The pattern of figure 7a is the one of figure 5e with its neighboring pixel.

Figure 7b represents the grid of figure 7a moved to the right of one pixel.

It can be seen that all the characteristic points, 720b, are correctly tracked. This is why it is specifically advantageous to implement the invention.

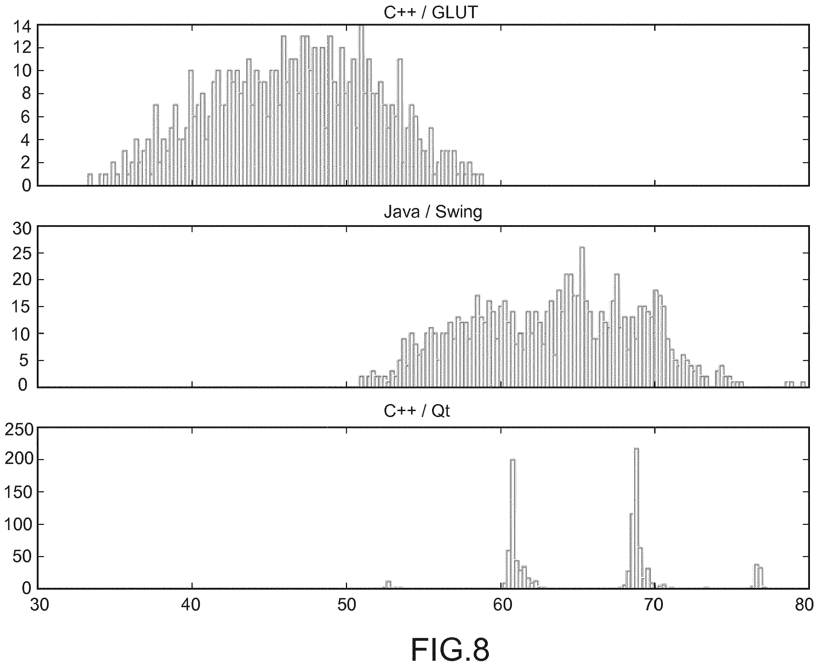

Figure 8 represents distribution of latency as measured in an embodiment of the invention.

For a given texture, the measured values of latency will notably depend on:
- The mouse (and possibly its sensor);
- The screen;
- The processing device;
- The software environment (OS/development environment/application).

The table below displays the success rate (SR) of the measurement, the mean value of end-to-end latency (i.e. the difference in time between the Window repaint event 200 and the MouseMove event 240 of figure 2) and its standard deviation (which is a measurement of latency jitter) for 10 different mice (first row of the table, with an indication of the model and of the sensor) and a MacBook Pro™ and two different monitors (Dell™ 1905fp 86 PPI and Apple Retina™ 148 PPI).

| | **Dell 1905fp (86 PPI)** | | | **Apple Retina (148 PPI)** | | |
|---|---|---|---|---|---|---|
| | SR | mean | std | SR | mean | std |
| Apple A1152 (Agilent ADNS-2051) | 83.2 % | 62.0 ms | 14.1 ms | 98.8 % | 64.1 ms | 6.0 ms |
| Dell M-UVDEL1 (Agilent S2599) | 18.0 % | 62.8 ms | 20.1 ms | 0.0 % | - | - |
| Dell MS111-L | 0.0 % | - | - | 0.0 % | - | - |
| IBM MO09BO (Agilent H2000) | 17.3 % | 71.8 ms | 26.2 ms | 64.4 % | 75.9 ms | 5.5 ms |
| Logitech M-BT58 (Avago ADNS-2610) | 75.7% | 62.9 ms | 16.5 ms | 99.9 % | 68.4 ms | 5.8 ms |
| Logitech M-U0017 (unknown) | 71.3 % | 71.6 ms | 9.8 ms | 41.1 % | 76.9 ms | 8.2 ms |
| Logitech M-UV96 (Agilent S2599) | 16.7% | 63.5 ms | 16.9 ms | 98.7% | 61.8 ms | 5.7 ms |
| Logitech M100 | 0.0 % | - | - | 16.0 % | 71.3 ms | 9.0 ms |
| Logitech MX310 (Agilent S2020) | 99.6 % | 55.1 ms | 7.0 ms | 99.9 % | 65.8 ms | 5.1 ms |
| Kensington Ci65 Wireless (unknown) | 94.1 % | 70.0 ms | 7.5 ms | 87.7 % | 81.6 ms | 6.6 ms |

The graphs of figure 8 display the distributions of the time elapsed (in ms) between events 200 and 240 for 3 different development environments (C++/GLUT, Java/Swing and C++/Qt) for a Logitech MX310 mouse. As can be seen, there are significant differences.

Latency will also vary significantly from one application to another, as can be seen from the table below.

| | **Application** | **mean** | **std** |
|---|---|---|---|
| Ubuntu 14.04 | Qt 5 app | 50.9 ms | 7.6 ms |
| | Chrome 41 | 71.3 ms | 5.7 ms |
| | Firefox 35 | 65.7 ms | 6.6 ms |
| Windows 7 | Qt 5 app | 74.9 ms | 9.2 ms |
| | Chrome 41 | 62.2 ms | 8.5 ms |
| | Firefox 37 | 83.0 ms | 9.7 ms |

Also, latency will vary significantly as a function of system load, as evidence by the next table below.

| **C++/Qt** | | **Java / Swing** | | |
|---|---|---|---|---|
| | mean | std | mean | std |
| <5% | 54.2 ms | 6.7 ms | 51.3 ms | 6.7 ms |
| 25% | 71.9 ms | 14.6 ms | 59.7 ms | 10.1 ms |
| 50% | 70.1 ms | 15.1 ms | 71.6 ms | 23.5 ms |
| 75% | 77.3 ms | 21.5 ms | 71.0 ms | 19.1 ms |
| 100% | 83.6 ms | 25.8 ms | 75.6 ms | 25.6 ms |

As already explained, a latency of 50 ms or more and a jitter of 20 ms or more will create a bad interaction experience for the user. It becomes all the more important to compensate latency to improve the user experience.

It is possible to take into account these different factors, whether determined by the configuration of the system (hardware and software) or varying over time (like application running and computing load), to model the behavior of a processing device. The model can be represented by a function with parameters or by abaci and can be then used in an operational system to define a calibration model and/or table and then compensate the actual latency and/or jitter upon execution of a defined application in a specific configuration of the processing device. A model fit to implement the invention may use a Kalman filter or Taylor series development algorithm. But other models known to a man of ordinary skill may be used, including statistical models.

It is also possible to use a calibration model or table defined using a specific input interface and a specific output interface and then convert the calibration model or table into another model/table for another pair of input interface/output interface. For some pairs of input interface/output interface, it is possible to define an offset. The offset may be calculated from sets of measurements and statistical adjustments, and then used in a conversion table.

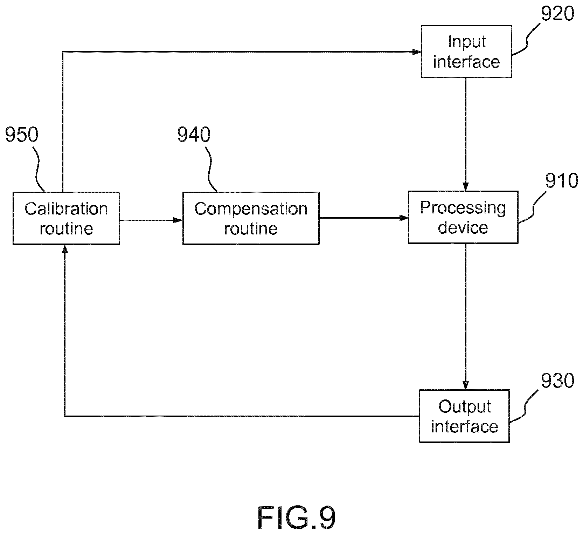

Figure 9 represents a flowchart of a process to compensate latency in real-time according to the invention.

A processing device 910 has an input interface 920 and an output interface 630. In a number of embodiments, the input interface may be a mouse, for instance an optical mouse. The output interface may be a screen. But other arrangements are possible. An input interface may be a touch screen or an audio device. An output interface may be an audio device. Latency may be calibrated using measurements of the same input and output interfaces of the processing device or using measurements from other input and output interfaces than the ones of the processing device and a conversion model or table. Exemplary embodiments of measurements and calibration have been discussed earlier in the description. Calibration is performed either using a model taking into account the various factors which have an impact on latency, for instance the hardware and software configuration of the processing device, as discussed earlier in earlier passages of the description.

In a number of embodiments of the invention, a compensation routine 640 is implemented from the calibration routine 950.

In a number of embodiments, the calibration routine is performed off-line and its results are stored in a table. The table may include values corresponding to a number of parameters of the hardware and/or software configuration of the processing device (input interface, output interface, development environment, application, etc.) and/or variables available on execution of a defined application (e.g. the computing load).

In a number of other embodiments, the calibration routine is executed in real time and its results are passed to the compensation routine. In these embodiments, the arrangement of measurements of latency will be operated upon execution of the application being executed on the processing device.

In a number of embodiments, the measurements performed with the input interface and the output interface which are operative on the processing device may be combined with a conversion model or table resulting from a calibration performed earlier with other input and/or output interfaces.

Examples of hardware and software configurations used for measurements of latency have been disclosed in other parts of the description, which may be used in any combination.

The examples disclosed in this specification are only illustrative of some embodiments of the invention. They do not in any manner limit the scope of said invention which is defined by the appended claims.

## Claims

1. An arrangement configured to calibrate latency of a processing device between an input interface and an output interface, said arrangement comprising:
- a generator of a calibrated output (410b) to be output by the processing device through the output interface (310a, 310b) as an output event;
- a sensor (330a, 330b) configured to capture the calibrated output and send it to a processing unit of the processing device through the input interface;
wherein the sensor is an optical sensor;
wherein the input interface is a port of the computer device adapted to receive datasets from computer mice; and
wherein the calibrated output is a two-dimensional periodic image (410b) configured to move on a screen of the processing device relatively to the optical sensor.

2. The arrangement of claim 1, wherein the two-dimensional periodic image comprises elementary patterns (410a), each elementary pattern comprising at least a number N of pixels of two different colors, at least n pixels (412a) in each elementary pattern being of a first color of a bright shade with a contrast to the other pixels (411a) of a second color equal to or higher than a preset threshold.

3. The arrangement of claim 2, wherein N equals 9 and n equals 2.

4. The arrangement of one of claims 2 or 3, wherein at least two pixels in the n pixels of the first color are diagonally contiguous.

5. A method of calibrating the latency of a processing device between an input interface and an output interface, said method comprising:
- generating a calibrated output (410b)
- outputting said calibrated output by the processing device through the output interface (310a, 310b);
- capturing the calibrated output by a sensor;
- sending the captured calibrated output to a processing unit of the processing device through the input interface;
wherein the sensor is an optical sensor,
wherein the input interface is a port of the computer device adapted to receive datasets from computer mice, and
wherein the calibrated output is a two-dimensional periodic image (410b) configured to move on a screen of the processing device relatively to the optical sensor.

6. The method of claim 5, wherein the two-dimensional periodic image comprises elementary patterns (410a), each elementary pattern comprising at least a number N of pixels of two different colors, at least n pixels (412a) in each elementary pattern being of a first color of a bright shade with a contrast to the other pixels (411a) of a second color equal to or higher than a preset threshold.

7. The method of claim 6, wherein N equals 9 and n equals 2.

8. The method of one of claims 6 or 7, wherein at least two pixels in the n pixels of the first color are diagonally contiguous.

## Patentansprüche

1. Anordnung, konfiguriert zum Kalibrieren von Latenz eines Verarbeitungsgeräts zwischen einer Eingangsschnittstelle und einer Ausgangsschnittstelle, wobei die Anordnung Folgendes umfasst:
ein Verarbeitungsgerät, das eine Ausgangsschnittstelle (310a, 310b), eine Eingangsschnittstelle und einen Generator für einen kalibrierten Ausgang (410b) zur Ausgabe durch das Verarbeitungsgerät über die Ausgangsschnittstelle (310a, 310b) umfasst, wobei die Anordnung ferner Folgendes umfasst:
einen Sensor (330a, 330b), konfiguriert zum Erfassen des kalibrierten Ausgangs und zum Senden desselben zu einer Verarbeitungseinheit des Verarbeitungsgeräts durch die Eingangsschnittstelle;
wobei der Sensor ein optischer Sensor ist;
wobei die Eingangsschnittstelle ein Port des Verarbeitungsgeräts ist, ausgelegt zum Empfangen von Datensätzen von Computermäusen; und
wobei die Ausgangsschnittstelle (310a, 301b) ein Bildschirm des Verarbeitungsgeräts ist und der kalibrierte Ausgang ein zweidimensionales periodisches Bild (410b) ist, konfiguriert zum Bewegen auf dem Bildschirm des Verarbeitungsgeräts relativ zu dem optischen Sensor.

2. Anordnung nach Anspruch 1, wobei das zweidimensionale periodische Bild elementare Muster (410a) umfasst, wobei jedes elementare Muster wenigstens eine Anzahl N von Pixeln von zwei unterschiedlichen Farben umfasst, wobei wenigstens n Pixel (412a) in jedem elementaren Muster eine erste Farbe eines hellen Tons mit einem Kontrast gegenüber den anderen Pixeln (411a) einer zweiten Farbe gleich oder größer als eine voreingestellte Schwelle haben.

3. Anordnung nach Anspruch 2, wobei N gleich 9 und n gleich 2 ist.

4. Anordnung nach einem der Ansprüche 2 oder 3, wobei wenigstens zwei Pixel in den n Pixeln der ersten Farbe diagonal zusammenhängend sind.

5. Verfahren zum Kalibrieren der Latenz eines Verarbeitungsgeräts zwischen einer Eingangsschnittstelle und einer Ausgangsschnittstelle des Verarbeitungsgeräts, wobei die Ausgangsschnittstelle ein Bildschirm des Verarbeitungsgeräts ist, wobei das Verfahren Folgendes umfasst:
- Erzeugen eines kalibrierten Ausgangs (410b);
- Ausgeben des kalibrierten Ausgangs durch das Verarbeitungsgerät durch die Ausgangsschnittstelle (310a, 310b);
- Erfassen des kalibrierten Ausgangs durch einen Sensor;
- Senden des erfassten kalibrierten Ausgangs zu einer Verarbeitungseinheit des Verarbeitungsgeräts durch die Eingangsschnittstelle;
wobei der Sensor ein optischer Sensor ist,
wobei die Eingangsschnittstelle ein Port des Verarbeitungsgeräts ist, ausgelegt zum Empfangen von Datensätzen von Computermäusen, und
wobei der kalibrierte Ausgang ein zweidimensionales periodisches Bild (410b) ist, konfiguriert zum Bewegen auf dem Bildschirm des Verarbeitungsgeräts relativ zu dem optischen Sensor.

6. Verfahren nach Anspruch 5, wobei das zweidimensionale periodische Bild elementare Muster (410a) umfasst, wobei jedes elementare Muster wenigstens eine Anzahl N von Pixeln von zwei unterschiedlichen Farben umfasst, wobei wenigstens n Pixel (412a) in jedem elementaren Muster eine erste Farbe eines hellen Tons mit einem Kontrast gegenüber den anderen Pixeln (411a) einer zweiten Farbe gleich oder höher als eine voreingestellte Schwelle haben.

7. Verfahren nach Anspruch 6, wobei N gleich 9 und n gleich 2 ist.

8. Verfahren nach einem der Ansprüche 6 oder 7, wobei wenigstens zwei Pixel in den n Pixeln der ersten Farbe diagonal zusammenhängend sind.

## Revendications

1. Agencement configuré de manière à étalonner une durée d'attente d'un dispositif de traitement entre une interface d'entrée et une interface de sortie, ledit agencement comprenant :
un dispositif de traitement comprenant une interface de sortie (310a, 310b), une interface d'entrée, et un générateur d'une sortie étalonnée (410b) devant être fournie en sortie par le dispositif de traitement par le biais de l'interface de sortie (310a, 310b), ledit agencement comprenant en outre :
un capteur (330a, 330b) configuré de manière à capturer la sortie étalonnée et à l'envoyer à une unité de traitement du dispositif de traitement à travers l'interface d'entrée ;
dans lequel le capteur est un capteur optique ;
dans lequel l'interface d'entrée est un port du dispositif de traitement apte à recevoir des ensembles de données provenant d'une souris d'ordinateur ; et
dans lequel ladite interface de sortie (310a, 310b) est un écran du dispositif de traitement et la sortie étalonnée est une image périodique bidimensionnelle (410b) configurée de manière à se déplacer sur ledit écran du dispositif de traitement par rapport au capteur optique.

2. Agencement selon la revendication 1, dans lequel l'image périodique bidimensionnelle comprend des motifs élémentaires (410a), chaque motif élémentaire comprenant au moins un nombre « N » de pixels de deux couleurs différentes, au moins « n » pixels (412a) dans chaque motif élémentaire présentant une première couleur d'une ombre vive avec un contraste, par rapport aux autres pixels (411a) d'une seconde couleur, égal ou supérieur à un seuil prédéfini.

3. Agencement selon la revendication 2, dans lequel « N » est égal à 9 et « n » est égal à 2.

4. Agencement selon l'une des revendications 2 ou 3, dans lequel au moins deux pixels parmi les « n » pixels de la première couleur sont contigus en diagonale.

5. Procédé d'étalonnage de la durée d'attente d'un dispositif de traitement entre une interface d'entrée et une interface de sortie dudit dispositif de traitement, dans lequel ladite interface de sortie est un écran du dispositif de traitement, ledit procédé comprenant:
- générer une sortie étalonnée (410b) ;
- fournir en sortie ladite sortie étalonnée par le biais du dispositif de traitement à travers l'interface de sortie (310a, 310b) ;
- capturer la sortie étalonnée, au moyen d'un capteur ; et
- envoyer la sortie étalonnée capturée à une unité de traitement du dispositif de traitement à travers l'interface d'entrée ;
dans lequel le capteur est un capteur optique ;
dans lequel l'interface d'entrée est un port du dispositif de traitement apte à recevoir des ensembles de données provenant d'une souris d'ordinateur ; et
dans lequel la sortie étalonnée est une image périodique bidimensionnelle (410b) configurée de manière à se déplacer sur ledit écran du dispositif de traitement par rapport au capteur optique.

6. Procédé selon la revendication 5, dans lequel l'image périodique bidimensionnelle comprend des motifs élémentaires (410a), chaque motif élémentaire comprenant au moins un nombre « N » de pixels de deux couleurs différentes, au moins « n » pixels (412a) dans chaque motif élémentaire présentant une première couleur d'une ombre vive avec un contraste, par rapport aux autres pixels (411a) d'une seconde couleur, égal ou supérieur à un seuil prédéfini.

7. Procédé selon la revendication 6, dans lequel « N » est égal à 9 et « n » est égal à 2.

8. Procédé selon l'une des revendications 6 ou 7, dans lequel au moins deux pixels parmi les « n » pixels de la première couleur sont contigus en diagonale.
